# EUROPEAN PATENT APPLICATION

(11) **EP 4 787 737 A1**
(43) Date of publication of application: **05.08.2026**
(21) Application number: 24870892.7
(22) Date of filing: 26.09.2024
(51) Int. Cl.: H04B 10/40, H04L 12/10, G06F 1/3203

(54) **COMMUNICATION BOARD AND POWER SUPPLY MANAGEMENT METHOD FOR OPTICAL MODULE**

(30) Priority: 28.09.2023 CN 202311288982
(71) Applicant: ZTE CORPORATION, Shenzhen, Guangdong 518057 (CN)
(72) Inventor: WANG, Hao, Shenzhen, Guangdong 518057 (CN); LI, Bo, Shenzhen, Guangdong 518057 (CN)
(74) Representative: Ziebig Hengelhaupt Intellectual Property Attorneys Patentanwaltskanzlei PartGmbB
(86) International application number: PCT/CN2024/121497
(87) International publication number: WO 2025/067353

(57) **Abstract**

The present application provides a communication board and a power supply management method for an optical module. The communication board comprises: optical modules, power supply modules, and a control circuit. The control circuit is used for determining an optical module in an idle state on the communication board, and controlling the power supply modules to stop supplying power to the optical module in the idle state.

## Description

### CROSS-REFERENCE TO RELATED APPLICATIONS

The present application claims priority to Chinese Patent Application No. 202311288982.4 filed on September 28, 2023 to the CNIPA, and entitled "COMMUNICATION BOARD AND POWER SUPPLY MANAGEMENT METHOD FOR OPTICAL MODULE", the entire content of which is incorporated herein by reference.

### TECHNICAL FIELD

The present application relates to the technical field of communication devices, in particular to a communication board and a power supply management method for an optical module.

### BACKGROUND

An optical communication device refers to a communication device that uses optical waves to transmit information. An optical module is an interface device of the optical communication device and is mainly responsible for sending and receiving of signals.

Typically, when a network is planned for a communication system, it is necessary to account for expansion and redundancy requirements. As a result, a large number of optical modules are disposed on a communication board of an optical communication device. Some of the optical modules are often in an idle state, causing power supply modules responsible for power supply to operate under no load. Generally, the no-load loss of a single power supply module exceeds 0.5 W, which represents a significant waste of energy when viewed from the perspective of the entire communication system.

Therefore, how to avoid no-load power supply to the optical modules and thus improve the optical communication device to prevent an unnecessary waste of energy is a technical issue that urgently needs to be addressed.

### SUMMARY

The objective of the present application is to provide a communication board and a power supply management method for an optical module.

In a first aspect, a communication board is provided and includes an optical module and a power supply module. The communication board further includes: a control circuit, configured to determine the optical module in an idle state on the communication board, and control the power supply module to stop supplying power to the optical module in the idle state.

In a second aspect, a power supply management method for an optical module of a communication board is provided. The communication board includes an optical module and a power supply module. The method includes: determining the optical module in an idle state on the communication board, and controlling the power supply module to stop supplying power to the optical module in the idle state.

### BRIEF DESCRIPTION OF DRAWING(S)

In order to explain technical solutions in embodiments of the present application or the related art more clearly, accompanying drawings that need to be used in descriptions of the embodiments or the related art will be briefly introduced below. Apparently, the accompanying drawings in the following descriptions are only some embodiments recorded in the embodiments of the present application, and those of ordinary skill in the art may further obtain other accompanying drawings from these accompanying drawings without creative work.
FIG. 1 is a schematic flowchart of a power supply management method for an optical module of a communication board in an embodiment of the present application.
FIG. 2 is a schematic structural diagram of a communication board apparatus in an embodiment of the present application.
FIG. 3 is a schematic structural diagram of a communication board apparatus in an embodiment of the present application under a first power supply mode.
FIG. 4 is a schematic structural diagram of a communication board apparatus in an embodiment of the present application under a second power supply mode.
FIG. 5 is a schematic structural diagram of an electronic device in an embodiment of the present application.

### DETAILED DESCRIPTION

As mentioned earlier, in existing optical communication devices, a large number of optical modules are configured on a communication board to meet expansion and redundancy requirements of network planning. As a result, some of the optical modules on the communication board are often in an idle state, causing power supply modules to supply power under no load. The no-load power supply of the power supply module represents a meaningless waste of energy. From the perspective of the entire communication system, this minor issue has far-reaching implications.

To this end, the present application aims to propose a power supply management solution for an optical module, which can avoid a power supply module in an optical communication device supplying power under no load to the optical module, and thus improve the optical communication device to prevent an unnecessary waste of energy.

In order to enable those in the technical field to better understand technical solutions in the present specification, the following will clearly and completely describe the technical solutions in embodiments of the present application in conjunction with accompanying drawings in the embodiments of the present application. Apparently, the described embodiments are only part of the embodiments of the present specification, rather than all the embodiments. Based on the embodiments in the present specification, all other embodiments obtained by those of ordinary skill in the art without creative work shall fall within the scope of protection of the present specification.

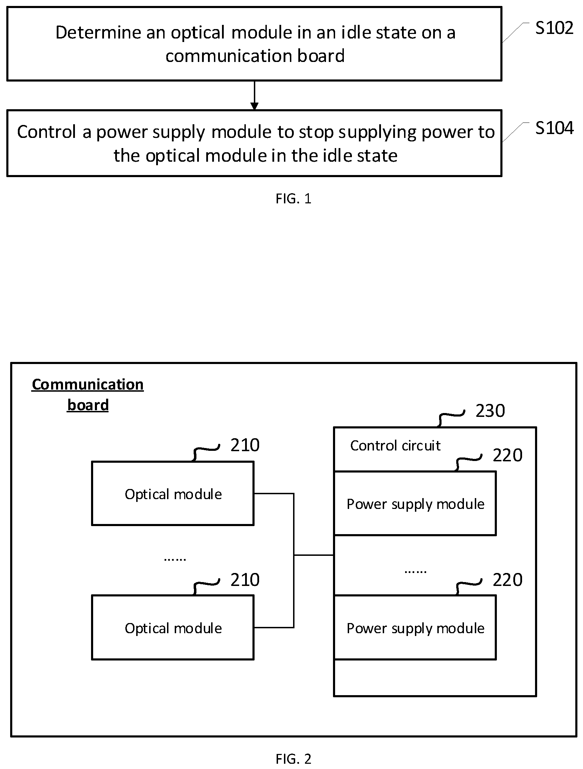

An embodiment of the present application provides a power supply management method for an optical module of a communication board. The communication board includes an optical module and a power supply module for supplying power to the optical module. FIG. 1 is a schematic flowchart of a power supply management method for an optical module. The method includes step S102: the optical module in an idle state on a communication board is determined.

Specifically, in this embodiment, it may be determined that the optical module not connected to the communication board is in the idle state, and it may be determined that the optical module connected to the communication board is in a non-idle state.

As an exemplary introduction, in this embodiment, whether the optical module is connected to the communication board may be detected in the following two modes.

Detection mode 1: determine whether the optical module is connected to the communication board via a level of a presence pin of the optical module.

Typically, the optical module is connected to the communication board via its presence pin (MOD_ABS pin). The presence pin corresponds to different levels when connected to the communication board and when not connected to the communication board.

Detection mode 2: determine whether the optical module is connected to the communication board by initiating access to the optical module.

For example, access is initiated to a register of the optical module. If the optical module is connected to the communication board, it feeds back a response signal to the access. If the optical module is not connected to the communication board, it does not feed back the response signal to the access.

Step S104: the power supply module is controlled to stop supplying power to the optical module in the idle state.

The optical module reconnected to the communication board may be defined as in the non-idle state. Correspondingly, in this embodiment, the power supply module may be controlled to supply power to the optical module in the non-idle state.

It needs to be noted that how to control the power supply module to supply power or stop supplying power to the optical module depends on power-up and power-down logic of the power supply module for the optical module in a circuit, which is not specifically limited in the present document here.

As an exemplary introduction, in this embodiment, whether the power supply module supplies power to the optical module may be controlled via the level of the MOD_ABS pin of the optical module. That is, the MOD_ABS pin of the optical module is at a low level by default. When the optical module is connected to the communication board, its MOD_ABS pin is connected to a control circuit of the communication board, pulling one access terminal of the control circuit down to a low level. At this point, the control circuit, according to a low-level signal, controls the power supply module to supply power to the optical module. Similarly, when the optical module is no longer connected to the communication board, its MOD_ABS pin no longer pulls the access terminal of the control circuit down to the low level. At this point, the access terminal of the control circuit returns to a high level, so that according to a high-level signal, the power supply module is controlled to stop supplying power to the optical module.

Power supply solutions of the power supply module are introduced below in conjunction with specific implementations.

FIG. 2 is a schematic structural diagram of a communication board provided in an embodiment of the present application. The communication board includes: an optical module 210 (at least one), a power supply module 220 (at least one) for supplying power to the optical module, and a control circuit 230.

The control circuit 230 is responsible for determining the optical module 210 in an idle state on the communication board; and, based on a level of a presence pin of the optical module, controlling the power supply module 220 to stop supplying power to the optical module in the idle state, and to supply power to the optical module 210 in a non-idle state.

Specifically, the power supply module 220 has the following two power supply modes.

Power supply mode 1: one power supply module 220 is only responsible for supplying power to one optical module 210. That is, the power supply module 220 and the optical module 210 in the communication board are in a one-to-one correspondence relationship.

Power supply mode 2: one power supply module 220 is responsible for supplying power to at least two optical modules 210. That is, each power supply module 220 corresponds to at least two optical modules 210 in the communication board.

### For Power supply mode 1

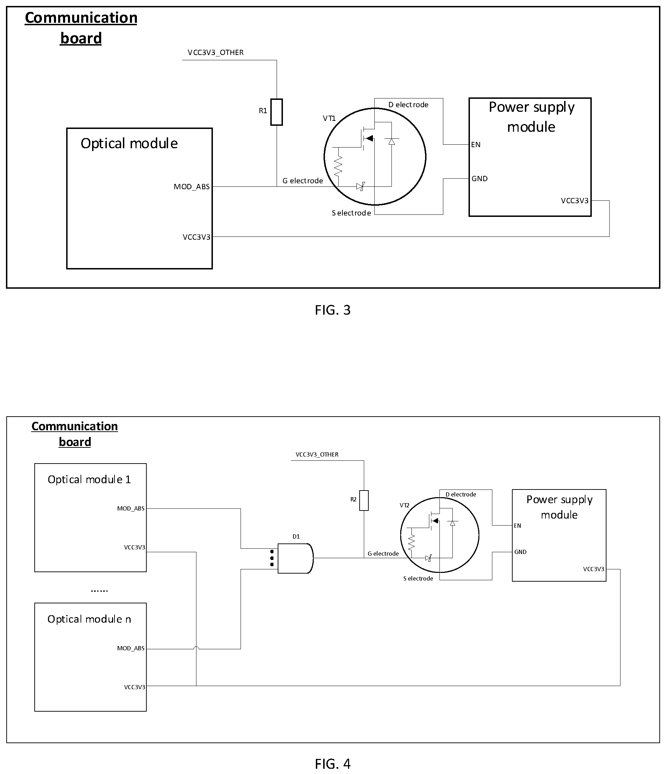

One group of corresponding power supply module and optical module is taken as an example, referring to the communication board shown in FIG. 3. The control circuit in the communication board is provided with a first resistor R1 and a first transistor VT1 for each corresponding power supply module and optical module.

One end of the first resistor R1 is connected to an MOD_ABS pin of the corresponding optical module and to a gate (hereinafter referred to as a G electrode) of the corresponding first transistor VT1. The other end of the first resistor R1 is connected to another power supply VCC3V3_OTHER (e.g., power supplies for devices such as a complex programmable logic device and a clock on the communication board). A drain (hereinafter referred to as a D electrode) of the first transistor VT1 is connected to an enable pin (EN pin) of the corresponding power supply module. A source (hereinafter referred to as an S electrode) of the first transistor is connected to a ground pin (GND pin) of the corresponding power supply module.

When the optical module is inserted into the communication board, its MOD_ABS pin is pulled to GND by default. At this point, the G electrode of the first transistor VT1 is pulled to a ground level for grounding, the first transistor VT1 is not turned on without driving, and the EN pin of the power supply module is suspended. At this point, the power supply module is powered up, and VCC3V3 is output to supply power to the optical module.

When the optical module is no longer inserted into the communication board, the MOD_ABS pin begins to be suspended. At this point, VCC3V3_OTHER is directly connected to the resistor R1, pulling the G electrode of the first transistor VT1 to a high level to turn on the first transistor VT1. After the first transistor VT1 is turned on, EN of the power supply module is pulled to ground via the first transistor VT1, and the EN pin is at a low level. At this point, the power supply module stops supplying power to the optical module, and the VCC3V3 power supply on the communication board does not output power by default. Power supply can only be achieved via the control circuit after the optical module is inserted.

### For Power supply mode 2

Refer to the control circuit of the communication board shown in FIG. 4. Under the assumption that one power supply module of the communication board is responsible for supplying power to n optical modules, the control circuit is provided with a second resistor R2, a second transistor VT2, and an AND gate D1 for each corresponding power supply module and optical module.

Input terminals of the AND gates D1 are connected to the MOD_ABS pins of all corresponding optical modules. One end of the second resistor R2 is connected to an output terminal of the corresponding AND gate D1 and the G electrode of the corresponding second transistor VT2, and the other end of the second resistor R2 is connected to another power supply VCC3V3_OTHER of the communication board. A D electrode of the second transistor VT2 is connected to the EN pin of the corresponding power supply module, and an S electrode of the second transistor VT2 is connected to the GND pin of the corresponding power supply module.

When any target optical module is connected to the communication board, its MOD_ABS pin is pulled to GND, and a low level is output via an AND gate circuit. At this point, the G electrode of the second transistor VT2 is pulled to ground. The second transistor VT2 is not turned on without driving, and the EN pin of the power supply module is suspended. At this point, the power supply module outputs VCC3V3 to supply power to the target optical module.

When the target optical module is no longer inserted into the communication board, its MOD_ABS pin is suspended. At this point, VCC3V3_OTHER is directly connected to the second resistor R2, pulling the G electrode of the second transistor VT2 to a high level to turn on the second transistor VT2. After the second transistor VT2 is turned on, the EN pin of the power supply module is pulled to ground via the second transistor VT2, and the EN pin is at a low level. At this point, the power supply module stops supplying power to the target optical module.

In practical applications, the communication board is provided with at least two power supply slots for each power supply module, and each power supply module supplies power to the optical modules inserted into the power supply slots thereof. For example, the serial number of the optical module is defined as mn according to the power supply module. m denotes an m-th power supply module, and n denotes an n-th slot corresponding to the m-th power supply module. A first power supply module may supply power to optical modules 11, 12, ..., and 1n. A second power supply module may supply power to optical modules 21, 22, ..., and 2n. ... The m-th power supply module may supply power to optical modules m1, m2, ..., and mn.

In this embodiment, optical modules that need to be connected to the communication board are inserted into corresponding slots in the order of the serial numbers of the power supply modules as a priority. That is, the optical module is inserted into the slot of the first power supply module as a priority. When the slots of the first power supply module are full, the optical module is then inserted into the slot of the second power supply module. The control circuit may power down the power supply module whose power supply slots are not inserted by any optical module currently, thereby maximizing the reduction in power consumption of the communication boards.

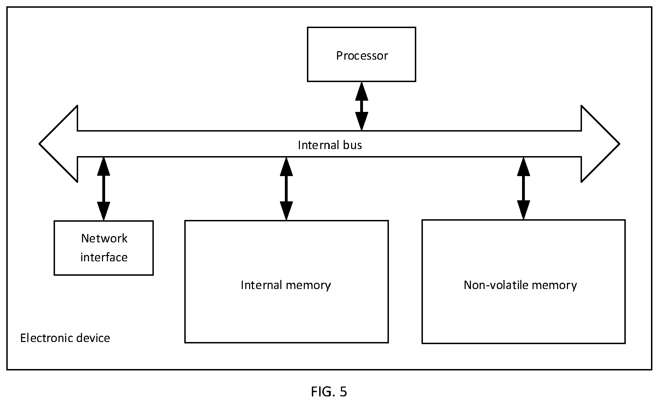

FIG. 5 is a schematic structural diagram of an electronic device in an embodiment of the present specification. Please refer to FIG. 5, at a hardware level, the electronic device includes a processor and optionally further includes an internal bus, a network interface, and a memory. The memory may contain an internal memory, such as a high-speed random-access memory (RAM), and may further include a non-volatile memory, such as at least one disk memory. Certainly, the electronic device may further include hardware required for other services.

The processor, the network interface and the memory may be connected to each other via the internal bus. The internal bus may be an industry standard architecture (ISA) bus, a peripheral component interconnect (PCI) bus, or an extended industry standard architecture (EISA) bus, etc. The bus may be categorized into an address bus, a data bus, a control bus, etc. For ease of representation, the bus is represented by only one bi-directional arrow in FIG. 5, but it does not indicate that there is only one bus or one type of bus.

The memory is configured to store a program. Specifically, the program may include a program code. The program code includes a computer operating instruction. The memory may include an internal memory and a non-volatile memory and provide instructions and data to the processor.

Optionally, the processor reads a corresponding computer program from the non-volatile memory into the internal memory and then runs the same. Correspondingly, the processor executes the program stored in the memory and is specifically configured to perform the following operations: determining the optical module in the idle state on the communication board, and controlling the power supply module to stop supplying power to the optical module in the idle state.

The above power supply management method for the optical module of the communication board as disclosed by the embodiments shown in the present specification may be applied to the processor and implemented by the processor. The processor may be an integrated circuit chip that has a capability to process signals. During an implementation process, all steps of the above method may be completed by an integrated logic circuit of hardware or instructions in the form of software in the processor. The above processor may be a general-purpose processor, including a central processing unit (CPU), a network processor (NP), etc., and may further be a digital signal processor (DSP), an application specific integrated circuit (ASIC), a fieldprogrammable gate array (FPGA) or other programmable logic devices, a discrete gate or a transistor logic device, or a discrete hardware component. Various methods, steps, and logical block diagrams disclosed in the embodiments of the present application may be realized or performed. The general-purpose processor may be a microprocessor, or the processor may also be any conventional processor, etc. The steps of the method disclosed in conjunction with the embodiments of the present application may be directly embodied to be performed and completed by a hardware decoding processor, or may be performed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory, and completes the steps of the above method in combination with its hardware.

Certainly, in addition to the implementation of software, the electronic device of the present specification does not exclude other implementations, such as a logic device or a combination of software and hardware, etc., which means that a performing subject of the following processing flow is not limited to the individual logic units, but may also be hardware or a logic device.

In addition, an embodiment of the present application further proposes a computer-readable storage medium storing one or more programs, and the one or more programs include instructions.

The above instructions, when executed by a portable electronic device including a plurality of applications, can cause the portable electronic device to perform the steps of the method shown in FIG. 1, including: determining the optical module in the idle state on the communication board, and controlling the power supply module to stop supplying power to the optical module in the idle state.

Those of skill in the art should understand that the embodiments of the present specification may be provided as methods, systems, or computer program products. Therefore, the present specification may take the form of a full hardware embodiment, a full software embodiment, or an embodiment combining software and hardware. Besides, the present specification may adopt the form of a computer program product implemented on one or more computer available storage media (including but not limited to a disk memory, a CD-ROM, an optical memory and the like) containing computer available program codes.

Specific embodiments of the present specification are described above. Other embodiments are within the scope of the appended claims. In some cases, actions or steps recorded in the claims may be executed in an order different from that in the embodiments and still realize desired results. Further, the processes depicted in the accompanying drawings do not necessarily require the specific order or successive order shown to realize the desired results. In some implementations, multitasking and parallel processing may be possible or may be advantageous.

The foregoing is merely embodiments of the present specification and is not intended to limit the present specification. Various changes and variations of the present specification are possible for those of skill in the art. Any modification, equivalent replacement, improvement, etc. made within the spirit and principle of the present specification should be included in the scope of the claims of the present specification. In addition, all other embodiments obtained by those of ordinary skill in the art without making creative work should belong to the scope of protection of the present document.

## Claims

1. A communication board, comprising an optical module and a power supply module for supplying power to the optical module, wherein the communication board further comprises:
a control circuit, configured to determine the optical module in an idle state on the communication board, and control the power supply module to stop supplying power to the optical module in the idle state.

2. The communication board according to claim 1, wherein the control circuit is further configured to: determine the optical module in a non-idle state on the communication board, and control the power supply module to supply power to the optical module in the non-idle state.

3. The communication board according to claim 2, wherein the control circuit is configured to: control the power supply module to supply power or stop supplying power to the optical module based on a level of a presence pin of the optical module.

4. The communication board according to claim 3, wherein a plurality of optical modules and power supply modules are provided, and the power supply modules are in one-to-one correspondence to the optical modules; and
the control circuit is provided with a first resistor and a first transistor for each corresponding power supply module and optical module;
wherein one end of the first resistor is connected to the presence pin of the corresponding optical module and to a gate of the corresponding first transistor, and the other end of the first resistor is connected to another power supply of the communication board; and a drain of the first transistor is connected to an enable pin of the corresponding power supply module, and a source of the first transistor is connected to a ground pin of the corresponding power supply module.

5. The communication board according to claim 3, wherein a plurality of optical modules and power supply modules are provided, and each power supply module corresponds to at least two optical modules; and
the control circuit is provided with a second resistor, a second transistor, and an AND gate for each corresponding power supply module and optical module;
wherein input terminals of the AND gates are connected to the presence pins of all the corresponding optical modules respectively; one end of the second resistor is connected to an output terminal of the corresponding AND gate and a gate of the corresponding second transistor, and the other end of the second resistor is connected to another power supply of the communication board; and a drain of the second transistor is connected to an enable pin of the corresponding power supply module, and a source of the second transistor is connected to a ground pin of the corresponding power supply module.

6. The communication board according to claim 5, wherein the communication board is provided with at least two power supply slots for each power supply module, and each power supply module supplies power to the optical modules inserted into the power supply slots thereof; and
the control circuit is further configured to: power down the power supply module whose power supply slots are not inserted by any optical module currently.

7. The communication board according to any of claim 1 or 2, wherein the control circuit is further configured to: determine that the optical module not connected to the communication board is in the idle state, and determine that the optical module connected to the communication board is in the non-idle state.

8. The communication board according to claim 7, wherein the control circuit is configured to: determine whether the optical module is connected to the communication board via a level of a presence pin of the optical module.

9. The communication board according to claim 7, wherein the control circuit is configured to: determine, by initiating access to the optical module, that the optical module is connected to the communication board.

10. A power supply management method for an optical module of a communication board, wherein the communication board comprises an optical module and a power supply module for supplying power to the optical module, and the method comprises:
determining the optical module in an idle state on the communication board; and
controlling the power supply module to stop supplying power to the optical module in the idle state.
